# DEMANDE DE BREVET EUROPEEN

(11) **EP 1 872 892 A1**
(43) Date de publication de la demande: **02.01.2008**
(21) Numéro de dépôt: 07012256.9
(22) Date de dépôt: 22.06.2007
(51) Int. Cl.: B23K 11/30

(54) **Procédé et installation de mise en oeuvre d'électrodes de soudage par points**

(30) Priorité: 30.06.2006 FR 0605908
(71) Demandeur: EXROD, 78570 Chanteloup-les-Vignes (FR)
(72) Inventeur: Boyer, Jean, 78114 Magny-les-Hameaux (FR)
(74) Mandataire: Thibon-Littaye, Annick

(57) **Abrégé**

L'installation, du type à pince au sol, comporte un robot (10) de manutention des pièces à souder commandé à partir d'une baie de pilotage automatique de robot (50), depuis laquelle, le plus souvent, on assure également le pilotage de la pince de soudage elle-même (20) dans les commandes de fermeture et ouverture tendant à rapprocher ou éloigner l'une de l'autre les électrodes (21, 22) qu'elle porte en vis à vis. Selon l'invention, un axe de commande supplémentaire est ajouté au système de pilotage (50) pour assurer en outre le pilotage d'une rodeuse (30) de rectification desdites électrodes amenée à intervenir sur celles-ci en alternance avec les opérations de soudage. Il en est ainsi au moins pour les commandes assurant un déplacement angulaire par rapport à la pince (20) d'un abattant de rodeuse (32) porteur d'une fraise d'usinage simultané (31) des électrodes (21, 22) en vis à vis. Le système de pilotage (50) est configuré pour commander automatiquement ce déplacement en se conformant à une procédure cyclique d'intervention de la rodeuse (30) respectant un programme pré-établi et impliquant des paramètres variables, à régler notamment par apprentissage.

## Description

La présente invention concerne la conception et la réalisation des machines robotisées qui sont utilisées dans le cadre du soudage par points. Les machines en question trouvent application de manière courante dans tous les ateliers de mécanique où l'on effectue l'assemblage de deux pièces l'une sur l'autre en réalisant des points de soudure successifs entre deux pointes qui les enserrent. Pour des pièces métalliques, ces pointes sont des électrodes portées à des potentiels opposés entre lesquelles on crée de manière répétitive un arc électrique qui provoque un échauffement local de la matière entraînant sa fusion partielle, et donc le soudage. Classiquement, les deux électrodes sont montées en bout des deux mors d'une pince, qui est commandée pour se fermer périodiquement sur les pièces en cours de soudage, cependant que ces pièces sont entraînées à suivre une trajectoire de déplacement prédéterminée.

Les électrodes s'encrassent au fur et à mesure de leur usage. Leur surface s'encombre de calamine. La perte de conductivité électrique qui en résulte perturbe les conditions de production de l'arc électrique, alors qu'en plus, la qualité de soudure et la solidité de la jonction entre les pièces se trouvent notablement affectées par les irrégularités de surface des électrodes qui apparaissent.

Pour éviter d'avoir à jeter les électrodes usagées dès le premier encrassement par trop gênant qu'elles connaissent, il est habituellement prévu de les nettoyer, au cours d'un traitement de rectification qui consiste à usiner les électrodes, en leurs extrémités actives pendant le soudage, par une fraise en rotation. Réalisée classiquement à l'écart de la ligne de soudage proprement dite, cette opération de rectification des électrodes peut être effectuée au moyen d'une tête de rodage portant une fraise pourvue de lames tranchantes sur ses deux faces transversales opposées, et qui vient se placer au droit des électrodes, ces dernières étant appliquées par des moyens appropriés, préférentiellement constituées de la pince de soudage proprement dite, de part et d'autre de ladite fraise pour subir simultanément le rodage.

Il existe deux grandes classes d'installations, entre lesquelles la différence est que dans l'une des configurations, la pince défile le long de la ligne de points de soudure à réaliser sur les pièces au cours du soudage, alors que dans l'autre, la pince reste en position fixe au sol pendant les opérations de soudage, cependant que les pièces à souder sont entraînés à se déplacer entre les électrodes. Les avantages obtenus par la mise en oeuvre de l'invention sont particulièrement appréciables quand il s'agit des installations dans lesquelles la pince reste fixe durant les opérations de soudage, et dans lesquelles les pièces à souder sont amenées à ladite pince par un robot de manutention. Dans les installations de ce type, la rectification des électrodes est assurée par une rodeuse présente à proximité de ladite pince, associée à un dispositif de contrôle et de test des électrodes de celle-ci. Dans certaines de ces installations, décrites par exemple par le document US 2004/0112874, en alternance avec les cycles de soudage, on fait basculer la pince de soudage vers une position prédéterminée, choisie pour placer la fraise entre les deux électrodes en vis à vis. En fin des opérations de rectification, la pince de soudage est ramenée à sa position de travail, sur la ligne de déplacement des objets à souder. La réalisation mécanique de la pince de soudage est toutefois ici rendue plus complexe par la combinaison des contraintes mécaniques et électriques liées à la présence des électrodes et au déplacement de ladite pince vers l'installation de contrôle et de rodage.

Dans les dispositifs de rodage dans lesquels la fraise portée par la tête de rodage vient se placer entre les électrodes toujours montées sur la pince de soudage, les procédés connus imposent, du fait des dispositifs de commande et de déplacement de l'abattant portant ladite tête de rodage, qu'un cycle de soudage soit complètement terminé avant d'entamer les opérations de rodage. En particulier, ces procédés imposent que le robot pilotant le déplacement des pièces à souder, ainsi que la mise en place de ces dernières entre les électrodes de la pince et les commandes d'ouverture et de fermeture des mâchoires de celle-ci ait achevé un cycle de fonctionnement complet (chargement et installation des pièces dans la pince, réalisation de la soudure, puis déchargement des pièces soudées).

Dans ces procédés, le temps de- cycles de rodage- vient donc s'ajouter au temps de fabrication, ce qui ralentit la cadence de production.

La présente invention vise essentiellement à améliorer les performances des installations de soudage par points et à simplifier la construction des moyens mécaniques et la mise en oeuvre de la rodeuse, en passant notamment par une réduction des coûts et une accélération des processus de production.

Pour répondre aux objectifs qu'elle s'est fixés, ceux qui viennent d'être cités et d'autres que l'on comprendra mieux à la lecture de la suite de l'exposé, l'invention propose de profiter de la présence d'une baie de robot assurant le pilotage robotisé des opérations de soudage, donc en particulier le déplacement des deux pièces à souder l'une sur l'autre par rapport à la pince de soudage, notamment dans le cas où cette pince est en poste fixe, pour assurer également un pilotage robotisé de la rodeuse utilisée pour les opérations de rectification en alternance avec les opérations de soudage.

L'invention prévoit en particulier de faire porter ce pilotage commun avec le robot, assuré depuis la même baie ou pupitre de pilotage, au moins sur les commandes de déplacement de la fraise de rodage par rapport à la pince de soudage. Le pilotage par robot permet alors de commander ce déplacement automatiquement en se conformant à un programme préalablement enregistré, éventuellement en suite d'une procédure d'apprentissage. On comprend donc ici que l'invention s'applique de manière particulièrement avantageuse à toutes les situations de fabrication industrielle dans lesquelles l'on a à exécuter des opérations de soudage de manière répétitive pour des pièces de même nature et de même configuration qui sont traitées en série dans l'atelier de soudage.

Ainsi, l'invention a plus particulièrement pour objet un procédé de mise en oeuvre des électrodes de soudage dans une installation de soudage par points dans laquelle les électrodes sont montées en vis à vis dans une pince de soudage, avantageusement du type fonctionnant en poste fixe, et qui comporte un robot de manutention des pièces à souder commandé à partir d'une baie- de- pilotage automatique de robot, caractérisé en ce qu'un axe- de commande: supplémentaire est ajouté à la baie de pilotage de robot pour assurer en outre le pilotage d'une rodeuse de rectification desdites électrodes amenée à intervenir sur celles-ci en alternance avec les opérations de soudage.

Il en est ainsi, dans les modes de mise en oeuvre préférés de l'invention, au moins pour les commandes assurant un déplacement angulaire par rapport à la pince d'une fraise d'usinage simultané des électrodes en vis à vis, qui peuvent être assurées de manière automatique en se conformant à une procédure cyclique d'intervention de la rodeuse respectant un programme pré-établi et impliquant des paramètres variables, à régler notamment par apprentissage, lesdits paramètres variables concernant notamment différentes positions limites de l'abattant au cours de chaque cycle d'intervention de la rodeuse, le sens du déplacement angulaire et sa vitesse au cours de différentes séquences prédéfinies d'un même cycle.

Il en est ainsi aussi, de préférence, pour une régulation de la pression des électrodes sur les faces actives de la fraise en rotation, par action sur la commande de la pince de soudage de manière à maintenir l'écartement entre les extrémités des électrodes en vis à vis à une valeur de consigne prédéterminée, avantageusement réglable et préalablement enregistrée.

Cette caractéristique secondaire de l'invention est d'autant plus aisée à mettre en oeuvre en pratique, en n'apportant au matériel en place dans les ateliers de soudage par points traditionnels que des simplifications et améliorations, que le plus souvent, déjà dans les installations connues dites à pince en poste fixe, c'est par le système de pilotage dédié au robot de manutention des pièces à souder que l'on assure également le pilotage de la pince de soudage elle-même dans les commandes de fermeture et ouverture tendant à rapprocher ou éloigner les électrodes en vis à vis l'une de l'autre pendant les opérations de soudage. On sera alors conduit à appliquer des valeurs de consigne différentes, respectivement propres aux opérations de soudage et propres aux opérations de rodage; et à ajuster les commandes de la pince en fonction de mesures prenant en compte l'état des électrodes après un cycle de rectification.

La même invention s'exprime aussi, en termes de: moyens matériels, par une installation de soudage par points caractérisée en ce: qu'elle comporte un système de pilotage automatique d'un robot de manutention de pièces à souder par rapport à une pince de soudage considérée en poste fixe qui comporte aussi, par un axe de commande qui lui est ajouté, des moyens de pilotage automatique des déplacements angulaires d'un abattant de rodeuse portant une fraise de rectification desdites électrodes intervenant en alternance avec les opérations de soudage desdites pièces.

Un tout premier intérêt du pilotage automatique prévu suivant l'invention est de permettre une procédure de basculement de l'abattant avec variation de la vitesse. En imposant une vitesse de déplacement angulaire relativement rapide quand l'abattant est dans une position ioin de la pince de soudage, donc notamment au début de l'amenée de l'abattant vers la pince de soudage ou en fin de son retour dans sa position « de repos », et au contraire, une vitesse relativement lente quand l'abattant arrive à l'approche de la pince et que le besoin de précision dans le positionnement de la fraise par rapport aux électrodes prend le pas sur les objectifs de rapidité. La solution de l'invention conduit au total à une accélération importante des cadences de fabrication dans le traitement de pièces en série ou la réalisation de soudures sur grande longueur.

Un autre avantage important de l'invention est que, du fait du mode de pilotage qu'elle met en oeuvre pour l'abattant de la rodeuse, les opérations de rodage peuvent être réalisées en temps masqué, par exemple pendant des phases de chargement ou de déchargement des pièces entre les mâchoires de la pince à souder, contrairement aux installations classiquement connues et évoquées précédemment. Il en résulte alors une accélération sensible du processus de production, et, par là, une réduction significative des coûts.

Le procédé selon l'invention permet de plus, de conférer de manière simple à l'abattant de la rodeuse le même niveau de sécurité dans ses déplacements que celui présenté par les autres robots de la ligne d'assemblage, simplifiant ainsi les processus de mise- en conformité avec les normes de sécurité.

Le mode de pilotage de l'abattant de rodeuse mis en oeuvre par l'invention permet, en outre; par l'absence de butée mécanique, une meilleure répétitivité de positionnement de celui-ci que les modes de pilotage dudit abattant mis en oeuvre dans les installation de rodage actuellement utilisées.

L'invention induit également que les références de positionnement dans l'espace à la fois de la fraise de rodage et des électrodes de la pince de soudage sont identiques et centralisées de manière unique par un même outil, ce qui augmente à la fois la précision et la reproductibilité du positionnement des différents éléments, ainsi que la rapidité de traitement et de transmission des informations relatives, notamment, au déplacement de l'abattant de la rodeuse.

Enfin, l'invention permet de s'affranchir d'un certain nombre de matériels, tels que, par exemple, des détecteurs de contrôle de position et de rotation de l'abattant de la rodeuse, ce qui conduit à une diminution supplémentaire des coûts.

Par ailleurs, dans les installations préférées suivant l'invention, le système de pilotage étant avantageusement équipé, d'une manière en soi connue, pour assurer également le pilotage les commandes de fermeture d'une pince portant les électrodes de soudage par points en vis à vis, il est prévu que le système de pilotage soit programmé pour une régulation de la pression des électrodes sur la fraise de rectification en fonction des conditions du rodage qu'elle assure. Ceci s'obtient notamment par asservissement des commandes d'ouverture et fermeture de la pince de soudage à des mesures réalisées par des instruments complémentaires ayant à intervenir dans la procédure de rectification qui sont portés par la même tête en bout de l'abattant de rodeuse que la fraise de rodage.

Parmi de tels instruments qui viennent avantageusement compléter la fraise de rodage dans l'appareillage de rectification des électrodes, suivant des caractéristiques secondaires de l'invention, il figure donc une- cale d'épaisseur dont la présence est exploitée pour maintenir automatiquement l'écartement entre les pointes d'électrodes dans la position fermée: de- la pince- à une valeur de consigne: prédéterminée réglable pour les appliquer sur la fraise en rotation.

Suivant d'autres caractéristiques de l'invention, lesdits instruments comportent avantageusement des dispositifs sensibles aux résultats des opérations de rectification, en particulier de l'usure par la fraise en rodage en rotation. Il en est ainsi, par exemple, de capteurs optiques de l'état de surface des électrodes après qu'elles aient subi l'action de la fraise de rodage. Le système de pilotage, convenablement programmé, peut alors vérifier si cet état de surface est conforme à des valeurs de consigne prédéterminées, et s'il ne l'est pas, commander automatiquement un nouveau passage des électrodes par la position de rodage par la fraise.

D'une manière plus générale, l'invention prévoit avantageusement que, sur la même tête d'abattant de rodeuse que la fraise de rodage des électrodes, il soit monté des organes fonctionnels pouvant intervenir en complément de la fraise de rodage des électrodes, au cours d'un même cycle de rectification, dont notamment des dispositifs sensibles aux résultats des opérations de rectification et/ou des appareils de traitement complémentaire des électrodes. Le système de pilotage comporte alors avantageusement des moyens de réglage des commandes des mouvements angulaires de l'abattant de rodeuse et/ou des commandes d'ouverture et fermeture de la pince portant les électrodes de soudage, pour les cycles de soudage et/ou de rectification, en fonction d'informations fournies par lesdits instruments. Les mêmes capacités de programmation des déplacements de l'abattant de rodeuse, en plusieurs séquences au cours de chaque cycle de rectification, peuvent être exploitées pour des opérations de traitement des électrodes complémentaires au rodage par la fraise.

Bien entendu les différentes caractérisques secondaires de l'invention peuvent avantageusement être appliquées en combinaison les unes avec les autres, et il en est de même pour d'autres caractéristiques qui ressortiront mieux de la suite de la description, comme il ressort ci-après de sa mise en oeuvre concrète dans un exemple de réalisation.

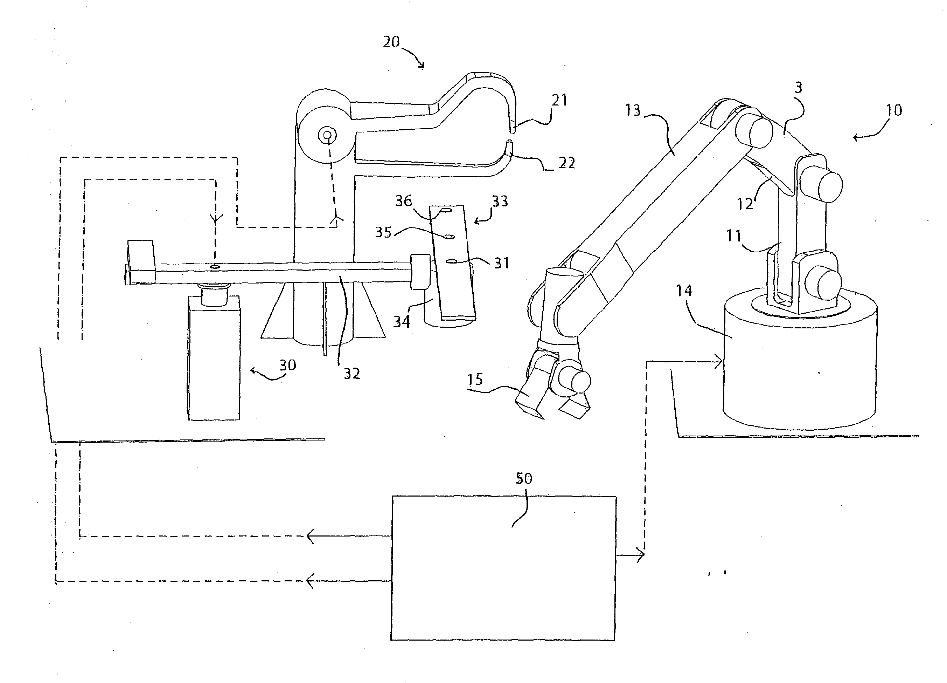

La figure unique- des dessins annexés illustre la composition d'une installation suivant l'invention telle qu'elle peut s'appliquer notamment dans un atelier de soudage par points, comme il en existe dans de nombreux endroits dans les usines de production de l'industrie automobile.

Les appareils comportent principalement un robot de manutention de pièces à souder 10 et une pince de soudage par points 20 qui sont l'un et l'autre parfaitement classiques dans leur constitution et dans leur fonctionnement.

Les installations existantes comportent en plus un système de pilotage automatique intégrant une baie de robot 50 de laquelle partent tous les signaux qui commandent automatiquement le fonctionnement du robot 10 pour la manutention des pièces à souder. Depuis la même baie de robot il est courant de commander en plus le fonctionnement de la pince de soudage 20 dans toutes les manoeuvres qui assurent l'ouverture et la fermeture de la pince afin de rapprocher ou éloigner les deux électrodes en vis-à-vis qu'elle comporte (21 et 22). Un troisième appareil présent sur les lieux est constitué par une rodeuse 30 qui est utilisée en alternance avec les opérations de soudage pour assurer la rectification des extrémités des électrodes 21 et 22.

La pince de soudage 20 étant en poste fixe suivant l'expression traditionnelle, la rodeuse 30 porte une fraise rotative 31 en bout d'un bras porteur qu'il est usuel d'appeler l'abattant 32. En effet, dans le cas d'une pince en poste fixe, c'est la fraise 31 qui vient se placer entre les deux électrodes en vis-à-vis 21 et 22 après que les pièces entraînées par le robot 10 aient été écartées, dans les installations tels que connues dans l'état de la technique comme il a été mentionné précédemment.

Dans les installations existantes, l'abattant est commandé localement pour basculer d'une position inactive à l'écart de la pince de soudage à une position active en rectification des électrodes. Cette position active doit être déterminée au préalable avec précision pour que la fraise se situe alors au droit des électrodes afin que, lorsque la pince est commandée en fermeture, les électrodes portent respectivement sur les deux faces transversales de la fraise en rotation pour y subir le rodage de leurs extrémités..

Ce fonctionnement classique implique la présence de butées: ou organes indexeurs qui fixent les limites du parcours de déplacement angulaire du bras porteur de la fraise (abattant 32). Les butées de ce genre deviennent totalement inutiles quand la présente invention est mise en oeuvre. Il en est de même de l'appareillage d'entraînement par vérin pneumatique ou par moteur électrique en parcours aller et parcours retour.

Le système de pilotage, depuis la baie de robot 50, assure en premier lieu le pilotage du robot de manutention 10, ou manipulateur préhenseur des pièces à souder. Sous la commande du système de pilotage, ce robot va chercher les pièces à souder, qui sont traitées en série suivant des cycles de soudage pré-déterminés, sous asservissement à des programmes enregistrés qui sont mis au point par apprentissage au cours d'essais préalables, lesquels portent de préférence, au moins pour partie, sur une première série échantillon des pièces à traiter.

Dans le cas particulier illustré, la baie de robot 50 est supposée comporter huit axes de pilotage, le robot lui-même en demandant six. Il doit toutefois être bien compris que l'invention ne se limite pas à un tel cas et qu'elle s'applique à tout robot pouvant accueillir un axe de pilotage supplémentaire pour assurer, en outre, le pilotage de la rodeuse.

Le robot 10 est essentiellement constitué par un manipulateur comportant un bras de déplacement du préhenseur à trois éléments articulés en série l'un sur l'autre, qui portent sur la figure les références respectives 11, 12 et 13. Le premier 11 est un élément partant d'un socle fixe 14 sur lequel il est monté rotatif autour d'un axe vertical, et également basculant autour d'un axe longitudinal. L'élément intermédiaire 12 tourne autour d'axes horizontaux sur le premier élément 11 d'une part, sur le troisième élément 13 d'autre part. A l'extrémité opposée, le troisième élément 13 est lié par montage articulé à un élément terminal 15 qui constitue l'organe préhenseur des pièces, illustré par deux mâchoires qui les serrent entre elles. Le montage articulé du préhenseur 15 sur son bras porteur et la saisie des pièces demandent deux axes de pilotage à partir de la baie de robot 50. Dans un mode de réalisation classique d'un tel préhenseur, une- rotation autour d'un axe transversal assure un réglage précis de l'orientation des pièces à souder une fois amenées sur place par rapport- à l'entrefer des électrodes, de manière à faire correspondre la ligne des points de soudure à réaliser avec la trajectoire suivie entre les électrodes, tandis qu'une rotation autour d'un axe perpendiculaire au précédent assure une saisie ferme de deux pièces à souder serrées l'une sur l'autre entre deux mâchoires.

Un septième axe de pilotage automatique est utilisé pour assurer à partir de la baie de robot 50 un pilotage automatique des cycles de soudage pour ce qui concerne les commandes d'ouverture et de fermeture de la pince de soudage 20 au fur et à mesure que les pièces en cours de soudage sont amenées par le robot de manutention 10 à défiler entre les électrodes 21 et 22.

Conformément à l'invention, un huitième axe est ajouté pour commander la rodeuse 30 au cours des opérations de traitement des électrodes qui sont effectuées périodiquement pendant les cycles de rectification intervenant en alternance avec les cycles de rodage. Le rythme de ces opérations, leur nature et leur succession sont commandés par pilotage automatique en respectant des programmes enregistrés dans les registres informatiques de la baie de robot 50 au cours des essais préalables au traitement répétitif d'une série de pièces similaires.

Le déplacement angulaire de l'abattant 32 est ainsi commandé automatiquement suivant un programme pré-établi, ce en conjonction avec l'intervention des commandes du septième axe concernant ouverture et fermeture de la pince 20.

L'envergure de déplacement angulaire de l'abattant 32 n'est pas limitée par construction. L'installation suivant l'invention, telle qu'elle est décrite ici en exemple, est ainsi paramétrable pour des débattements angulaires de l'abattant à toute valeur sur 360 degrés.

Le programme mis en oeuvre à chaque cycle de rectification, sur commande du système de pilotage et paramétrage à partir de la baie de robot, est préalablement établi par apprentissage sur une première série de pièces, ou série échantillon, et enregistré dans les registres de mémoire du système de pilotage. Il est ensuite mis- en oeuvre automatiquement, de manière répétitive, à chaque cycle de rectification. Pour chaque- cycle, le- paramétrage initial peut imposer plusieurs séquences de: déplacement de l'abattant de rodeuse 32, courant sur des écarts angulaires différents, dans le sens aller ou dans le sens retour par rapport à la position de repos fixée à l'écart de la pince de soudage pour les périodes d'inactivité de la rodeuse. D'une séquence à l'autre durant le même cycle en cours, les paramètres des mouvements ordonnés à l'abattant par le système de pilotage de la baie de robot 50 peuvent aussi être réglables et variables en temps réel, notamment pour les ajuster en fonction de mesures effectuées sous ordre du système et dont les résultats sont pris en compte immédiatement dans la régulation.

Suivant l'invention, la rodeuse n'a donc plus à comporter ses propres moyens mécaniques à commande électrique par tout ou rien pour entraîner la tête de rodage dans ses déplacements angulaires. Toutes ces commandes sont assurées à partir de la baie de robot 50 suivant des cycles de pilotage paramétrables par apprentissage qui permettent avantageusement un déplacement angulaire de l'abattant qui est asservi non seulement en position mais également en vitesse.

L'asservissement en vitesse et son paramétrage constituent un avantage supplémentaire de l'invention, en ce qu'ils sont avantageusement utilisés pour réduire encore les temps de cycle de rodage en appliquant une vitesse plus rapide pour amener la tête de rectification au voisinage des électrodes à traiter et une vitesse plus lente pour un ajustement final en position et pour tous autres déplacements dans l'entrefer de la pince de soudage.

Il est à noter que le système de pilotage peut être configuré, en se conformant à une procédure cyclique d'intervention de la rodeuse telle que décrite ci-dessus, pour faire accomplir à l'abattant de rodeuse plusieurs passages aller et retour par la pince.

De même, les opérations de rectification peuvent faire intervenir divers traitements à effectuer en temps réel au moment où l'abattant se trouve entre les mors de la pince de soudage 20 ou à leur voisinage, sans plus avoir à utiliser plusieurs abattants, un pour chaque traitement, comme il serait le cas dans les installations existantes.

C'est ainsi que-dans le cas particulier considéré et comme il est illustré par la figure, l'abattant supporte en lieu et place de: la tête de rodage classique une: tête de rectification comportant une platine.- 33 sur laquelle sont montés, non seulement la fraise 31 avec son moteur d'entraînement propre 34, mais en outre, dans le cas présent, deux autres organes fonctionnels, très schématiquement illustrés en 35 et 36 pour montrer qu'ils se placent en ligne sur un arc de cercle centré sur l'axe de rotation de l'abattant porteur 32. Sur la trajectoire suivie au cours du déplacement angulaire de l'abattant, ces organes se placent, comme le fait la fraise 31 à un moment différent, précisément au droit des électrodes en vis-à-vis. Ces organes peuvent être constitués par des instruments de mesure ou par des appareils pour un traitement de rectification complémentaire des électrodes qui ont à intervenir en alternance avec la fraise de rodage au cours de certains au moins des cycles de traitement des électrodes en rectification.

Toujours en se plaçant spécifiquement dans le cas particulier choisi pour illustrer la mise en oeuvre de l'invention, on peut observer de la figure que les deux organes de traitement complémentaire sont montés sur la platine 33 devant la fraise 31 par rapport à la pince de soudage, alors que le moteur 34 de la fraise est au contraire en arrière en raison de son encombrement par rapport à l'entrefer des deux électrodes. On relèvera toutefois que dans le cas particulier d'un abattant de rodeuse capable de faire un tour complet en pivotant sous commande automatique du système de pilotage, cette disposition n'est pas indispensable.

Le dispositif 35 est essentiellement constitué par deux capteurs optiques qui sont sensibles à la lumière renvoyée par les extrémités des électrodes. Leur fonctionnement consiste à déterminer l'état de surface des électrodes jouant sur la réflexion d'un faisceau lumineux les éclairant. Selon que la lumière réfléchie est plus ou moins intense, on peut vérifier si la calamine a suffisamment été enlevée des électrodes. Si ce n'est pas le cas, une boucle d'asservissement commande l'entraînement de l'abattant afin que les électrodes repassent à l'étape de rodage par la fraise 31, plusieurs positions angulaires d'avance et de recul de l'abattant pouvant être programmées grâce à l'invention.

Quant au dispositif 36, il s'agit d'un capteur de proximité faisant office de cale étalon pour le réglage de l'écartement à imposer aux électrodes en fonction de leur usure réduisant leurs longueurs respectives. L'asservissement de cette grandeur de contrôle implique une boucle de réaction vers le moteur de commande de fermeture de la pince. On assure ainsi un ajustement en temps réel du paramétrage de serrage de la pince pour les opérations de rectification, en particulier dans le cadre d'une régulation de la pression des électrodes sur la fraise 31 pendant l'opération de rodage, mais aussi pour les opérations de soudage au cours du cycle de soudage ultérieur.

Naturellement l'invention n'est en rien limitée aux dispositions particulières qui ont été décrites ci-dessus. Elle en englobe au moins toutes les variantes, que ce soit celles qui impliquent le remplacement des moyens décrits par des moyens équivalents ou celles qui impliquent d'ajouter des moyens complémentaires.

A titre d'exemple de ce point de vue, un autre dispositif de traitement des électrodes à monter sur la platine 33 de la tête de rectification serait constitué par une brosse à poils souples ayant le rôle de débarrasser les électrodes des déchets de rodage pouvant altérer leur état de surface.

En autre exemple, on peut citer le cas où le même appareillage concernant la pince à souder et la rodeuse à abattant de rectification des électrodes de la pince de soudage serait utilisé en combinaison avec deux robots différents ayant à amener en position de soudage des pièces relevant de deux séries différentes. Deux baies de robot seraient alors présentes dans l'installation suivant l'invention, chacune comportant des moyens appropriés pour commander les axes propres de la pince de soudage et de l'abattant et enregistrer leur paramétrage tel qu'acquis au cours d'essais d'apprentissage propres à chacune des séries de pièces.

## Revendications

1. Procédé de mise en oeuvre des électrodes de soudage dans une installation de soudage par points dans laquelle les électrodes sont montées en vis à vis dans une pince de soudage (20) et qui comporte un robot (10) de manutention des pièces à souder commandé à partir d'une baie de pilotage automatique de robot (50), **caractérisé en ce qu'**un axe de commande supplémentaire est ajouté à ladite baie de pilotage de robot pour assurer en outre le pilotage d'une rodeuse (30) de rectification desdites électrodes amenée à intervenir sur celles-ci en alternance avec les opérations de soudage.

2. Procédé suivant la revendication 1, **caractérisé en ce que** l'on assure le pilotage de ladite rodeuse (30) au moins pour les commandes assurant un déplacement angulaire par rapport à la pince d'un abattant de rodeuse (32) porteur d'une fraise d'usinage simultané (31) des électrodes (21, 22) en vis à vis, en se conformant à une procédure cyclique d'intervention de la rodeuse respectant un programme pré-établi et impliquant des paramètres variables, à régler notamment par apprentissage, concernant différentes positions limites de l'abattant (32) au cours de chaque cycle d'intervention de la rodeuse, le sens du déplacement angulaire et sa vitesse au cours de différentes séquences prédéfinies d'un même cycle.

3. Procédé suivant la revendication 2, **caractérisé en ce que** l'on assure le pilotage de l'abattant de rodeuse et/ou le pilotage de la pince de soudage (20) dans les commandes de fermeture et ouverture tendant à rapprocher ou éloigner les électrodes en vis à vis l'une de l'autre, sous asservissement au résultat de mesures effectuées sur commande dudit programme au cours dudit cycle d'intervention de la rodeuse.

4. Procédé de mise en oeuvre des électrodes- de soudage dans une installation- de soudage par points dans laquelle les électrodes sont montées en vis à vis dans une pince de soudage (20) fonctionnant en poste fixe par rapport à un robot de manutention (10) des pièces à souder commandé à partir d'une baie de pilotage automatique de robot (50) à partir de laquelle on assure également le pilotage de la pince elle-même dans les commandes de fermeture et ouverture tendant à rapprocher ou éloigner les électrodes en vis-à-vis l'une de l'autre lors des commandes de soudage, **caractérisé en ce qu'**on ajoute un axe de commande supplémentaire à ladite baie de pilotage dudit robot (50) pour assurer en outre le pilotage d'une rodeuse (30) de rectification desdites électrodes amenée à intervenir sur celles-ci en alternance avec les opérations de soudage, au moins pour les commandes assurant un déplacement angulaire par rapport à la pince d'un abattant de rodeuse (32) portant une fraise d'usinage simultané des électrodes en vis à vis.

5. Procédé selon la revendication 4, **caractérisé en ce qu'**à partir de ladite baie de pilotage dudit robot (50) on assure une régulation de la pression des électrodes sur les faces actives de la fraise (31) en rotation, par action sur des paramètres réglables des commandes de la pince de soudage (20) en fonction d'une mesure effectuée sous commande d'un programme pré-établi au cours d'un même cycle de déplacement de l'abattant de rodeuse que le rodage des électrodes par ladite fraise.

6. Procédé suivant l'une quelconque des revendications 1 à 5, s'appliquant à une installation de fabrication industrielle dans laquelle des opérations de soudage sont exécutées de manière répétitive pour des pièces de même nature et de même configuration qui sont traitées en série, **caractérisé en ce que** le pilotage de la rodeuse (30) s'effectue par commande automatique d'un abattant de rodeuse (32) portant la fraise de rodage (31) des électrodes (2.1, 22), dans son déplacement angulaire par rapport à ladite pince (20), en se conformant à un programme préalablement enregistré, en suite d'une procédure d'apprentissage portant sur une première- série échantillon desdites pièces.

7. Installation de soudage par points **caractérisée en ce qu'**elle comporte un système (50) de pilotage automatique d'un robot (10) de manutention de pièces à souder par rapport à une pince de soudage (20) considérée en poste fixe qui comporte aussi des moyens de pilotage automatique des déplacements angulaires d'un abattant de rodeuse (32) portant une fraise de rodage en rectification des électrodes (21, 22) de ladite pince de soudage intervenant en alternance avec les opérations de soudage desdites pièces.

8. Installation suivant la revendication 7 **caractérisée en ce que** le système de pilotage automatique de robot (50) est configuré pour commander automatiquement le déplacement dudit abattant de rodeuse en se conformant à une procédure cyclique d'intervention de la rodeuse (30) respectant un programme pré-établi et impliquant des paramètres variables, à régler notamment par apprentissage.

9. Installation suivant la revendication 7 ou 8 **caractérisée en ce que** le système de pilotage (50) comporte des moyens d'asservissement des commandes d'ouverture et fermeture de la pince de soudage (20) à des mesures réalisées par des instruments portés par la même tête en bout de l'abattant de rodeuse (32) que la fraise de rodage.

10. Installation suivant l'une quelconque des revendications 7 à 9 **caractérisée en ce que** sur une même tête d'abattant de rodeuse que ladite fraise, il est monté des organes fonctionnels pouvant intervenir en complément de la fraise de rodage des électrodes, au cours d'un même cycle de rectification, dont notamment des dispositifs sensibles aux résultats des opérations de rectification et/ou des appareils de traitement complémentaires desdites électrodes, et en ce qui le système de pilotage (50) comporte des moyens de réglage des commandes des mouvements- angulaires de l'abattant de rodeuse (32) et/ou des commandes d'ouverture et fermeture de la pince (20) portant les électrodes de soudage, pour les cycles de soudage et/ou de: rectification, en fonction d'informations fournies par lesdits instruments.

11. Installation suivant l'une quelconque des revendications 7 à 10 **caractérisée en ce qu'**elle comporte des moyens d'acquisition par apprentissage de paramètres de fonctionnement qui sont pris en compte par le système de pilotage (50) pour régler les conditions de pilotage de la rodeuse (30), au moins dans la commande des déplacements angulaires de l'abattant porteur de la fraise de rodage.
